# EUROPÄISCHE PATENTANMELDUNG

(11) **EP 2 982 230 A1**
(43) Veröffentlichungstag der Anmeldung: **10.02.2016**
(21) Anmeldenummer: 15401078.9
(22) Anmeldetag: 03.08.2015
(51) Int. Cl.: A01C 7/20

(54) **SÄMASCHINE**

(30) Priorität: 05.08.2014 DE 102014111099
(71) Anmelder: Amazonen-Werke H. Dreyer GmbH & Co. KG, 49205 Hasbergen (DE)
(72) Erfinder: HOFFMANN, Karl-Peter, 27798 Hude (DE)

(57) **Zusammenfassung**

In einer Sämaschine (S) mit über ein Federelement (10) unter Schardruck in den Boden beaufschlagbaren Scharen (DS) und wenigstens einer einen doppelt wirkenden Hydraulikzylinder (Z) aufweisenden Einstellvorrichtung zum Vorwählen und ferngesteuerten Einstellen mindestens zweier (10), unterschiedliche Schardrücke definierender Positionen zum Vorspannen des Federelements und zum Umstellen zwischen den Positionen, sind zumindest das Einstellen der und das Umstellen zwischen den Positionen über einen dem Hydraulikzylinder (Z) zugeordneten Hydraulikkreis (K) und ein diesem vorgeschaltetes Steuergerät (21) ohne mechanische Anschläge rein hydraulisch ausführbar

## Beschreibung

Die Erfindung betrifft eine Sämaschine der im Oberbegriff des Patentanspruchs 1 angegebenen Art.

Bei einer aus DE 7825061 U1 bekannten, als Drillmaschine bezeichneten Sämaschine sind für durch vorgespannte Federn beaufschlagte Schare mindestens zwei unterschiedliche Schardrücke vorwählbar. In der Ausführungsform der Fig. 1, 2 nimmt ein angesteuerter doppelt wirkender Hydraulikzylinder eine Umstellung der Federvorspannung zwischen zwei durch manuell einstellbare mechanische Anschläge definierten Positionen vor. In der Ausführungsform in den Fig. 3 bis 5 sind zur Änderung der Federvorspannung mehr als zwei unterschiedliche Schardrücke definierende Positionen über einen Hebel und ein Zugseil von Hand einstellbar.

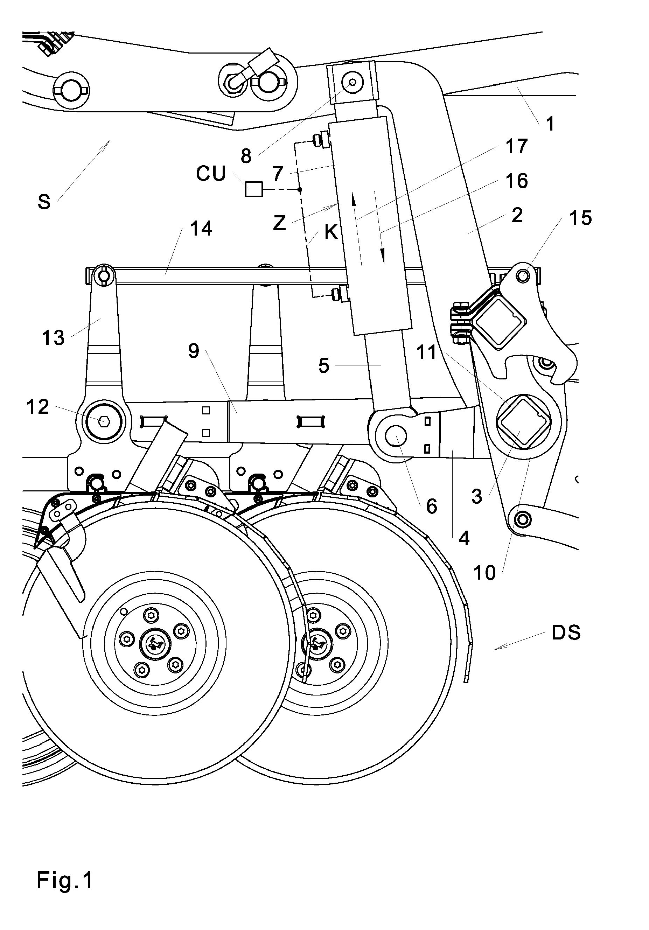

Bei einer aus EP 1634489 A1 bekannten Sämaschine stellt ein doppelt wirkender Hydraulikzylinder einer Einstellvorrichtung zwischen einer ersten Position für maximalen Schardruck und einer zweiten Position mit ausgehobenen Scharen um. Der Hydraulikzylinder greift über einen Stellhebel an einem drehbar gelagerten Scharbalken an, an dem Schare mittels eines Scharhalters angebracht sind, der gegenüber dem Scharbalken über eine Gummifeder begrenzt schwenkbar ist. Der maximale Schardruck wird in der ersten Position über die Vorspannung der Gummifeder erzeugt. Der Verstellweg des Hydraulikzylinders und damit nur der maximale Schardruck sind in der Ausführungsform der Fig. 1 bis 8 über einen durch eine Schraubspindel manuell verstellbaren mechanischen Anschlag einstellbar. In der Ausführungsform der Fig. 9 bis 11 fehlt ein mechanischer Anschlag, sodass der Verstellweg und damit der maximale Schardruck durch die Längenauswahl des Hydraulikzylinders bestimmt sind. Ein minimaler Schardruck lässt sich so vom Hydraulikzylinder nicht einstellen.

Der Erfindung liegt die Aufgabe zugrunde, eine Sämaschine anzugeben, bei der bequem ein schnelles Vorwählen, Einstellen von mindestens zwei unterschiedlichen Schardrücken und Umstellen zwischen den Schardrücken ohne mechanische Anschläge möglich sind.

Die gestellte Aufgabe wird mit den Merkmalen des Patentanspruchs 1 gelöst.

Da die Positionen, die zumindest zwei unterschiedliche Schardrücke definieren, rein hydraulisch und ohne mechanische Anschläge eingesteuert werden, sind zumindest das Einstellen der und das Umstellen zwischen den Schardrücken schnell und bequem, z.B. vom Traktor aus möglich, da an keinen mechanischen Anschlägen manuell manipuliert zu werden braucht. Dies ist insbesondere für Sämaschinen zweckmäßig, die modernen Anforderungen entsprechend Doppelscheiben-Schare (DS-Schare) aufweisen und hohe Ausbringleistungen und einen weitestgehend gleichmäßigen Aufgang des Saatgutes gewährleisten.

Um nicht nur zwischen den unterschiedlichen Schardrücken bequem und ferngesteuert umstellen zu können, sondern den doppelt wirkenden Hydraulikzylinder auch für den Scharaushub zu nutzen, beispielsweise als Vorstufe für den Transport der Sämaschine, ist es zweckmäßig, Hydraulikkomponenten für einen hydraulischen Scharaushub in den Hydraulikkreis zu integrieren.

Ein weiterer wichtiger Gesichtspunkt ist die sogenannten Konturanpassung in Arbeitsstellung befindlicher Schare bei Bodenunebenheiten. Zu diesem Zweck werden Hydraulikkomponenten für eine rein hydraulische Konturanpassung in den Hydraulikkreis integriert. Diese Hydraulikkomponenten können zumindest zum Teil auch Hydraulikkomponenten für die Vorwahl, das Einstellen oder das Umstellen mitbenutzen.

Beispielsweise für die Konturanpassung auf hydraulischem Weg ist zweckmäßig ein über das Steuergerät aufladbarer Druckspeicher in den Hydraulikkreis integriert oder an diesen angeschlossen, was es ermöglicht, nach dem Einstellen der jeweiligen Position in Arbeitsstellung der Schare den Hydraulikkreis über das Steuergerät geschlossen zu halten.

Andererseits kann es zweckmäßig sein, zumindest beim Einstellen und Umstellen den Hydraulikkreis über das Steuergerät geöffnet zu halten, und auch bei der Konturanpassung.

Zweckmäßig weist der Hydraulikzylinder in einer über Arbeitsleitungen mit dem Steuergerät verbundenen Zylinderkammer einen Kolben mit einer an der Kolbenbodenseite großen Beaufschlagungsfläche und einer an der Kolbenstangenseite kleineren Beaufschlagungsfläche auf, wobei, vorzugsweise der Schardruck bei Ausfahren der Kolbenstange erhöht wird.

In einer zweckmäßigen Ausführungsform weist der Hydraulikkreis zum Vorwählen und Einstellen unterschiedlicher Schardrücke in ersten und zweiten Zweigleitungen zwei unterschiedlich eingestellte Druckbegrenzungsventile auf. Die Druckbegrenzungsventile sind zum Vorwählen der Schardrücke voreingestellt. Vorzugsweise lassen sie sich aber manuell oder elektrisch beispielsweise über einen Proportionalmagneten und/oder elektrohydraulisch, beispielsweise über einen Proportionalmagneten und eine hydraulische Vorsteuerung, verstellen. Bei elektrischer oder elektrohydraulischer Verstellung sind somit eine Vielzahl unterschiedlicher Schardrücke ferneinstellbar oder ist der Schardruck nach Wunsch stufenlos verstellbar. In den Arbeitsleitungen sind Drosseln enthalten, die die Verstellgeschwindigkeit oder Umstellgeschwindigkeit begrenzen. Ferner sind in den Arbeitsleitungen Rückschlagventile enthalten, von denen ein, vorzugsweise mit einem Aufsteuerdruckverhältnis von mindestens 1:4, ausgebildetes Rückschlagventil aus einer Arbeitsleitung über eine Steuerleitung zum Umstellen von maximalem Schardruck auf den minimalen Schardruck hydraulisch entsperrbar ist. Dank des günstigen Aufsteuerdruckverhältnisses reicht zum Aufsteuern ein gegenüber dem Arbeitsdruck relativ geringer Steuerdruck aus, bei dem das entsperrbare Rückschlagventil schnell öffnet. In einer dritten Zweigleitung ist ein erstes magnetbetätigtes 2/2-Wegeventil vorgesehen, das zumindest in Arbeitsstellung der Schare die Kolbenstangenseite und die Kolbenbodenseite verbindet, was bspw. für die Konturanpassung zweckmäßig ist. An diese dritte Zweigleitung kann ein Druckspeicher und/oder Manometer angeschlossen werden, wobei der Druckspeicher ebenfalls für die Konturanpassung benutzt wird, während ein Manometer die Informationen liefert, die die Druckverhältnisse am Hydraulikzylinder repräsentieren.

Um bei dieser Ausführungsform auch einen Scharaushub rein hydraulisch ausführen zu können, ist es zweckmäßig, wenn in einer die dritte Zweigleitung mit der ersten Zweigleitung, die das höher eingestellte Druckbegrenzungsventil enthält, verbindenden vierten Zweigleitung ein beim Einstellen und Umstellen sperrendes zweites magnetbetätigtes 2/2-Wegeventil und in der ersten Zweigleitung ein drittes, beim Einstellen und Umstellen offenes magnetbetätigtes 2/2-Wegevetil vorgesehen sind. Die zweiten und dritten 2/2-Wegeventile sind für den Scharaushub nach Schalten des ersten 2/2-Wegeventils gemeinsam umschaltbar. Beim Scharaushub wird beispielsweise von der Kolbenbodenseite Druckmittel über das dann hydraulisch entsperrte Rückschlagventil und das Steuergerät ausgeschoben.

Bei einer weiteren Ausführungsform enthält der Hydraulikkreis in der Arbeitsleitung zur Kolbenstangenseite in Serie zwei 2/2-Wege-Abschaltventile, mit denen maximale und minimale Schardrücke vorwählbar und bei Betätigung einstellbar sind. Die Abschaltventile sind in einer Schaltstellung offen, und sperren in der anderen Schaltstellung in nur einer Strömungsrichtung. Beim Einstellen werden sie abhängig vom Hub des Hydraulikzylinders wechselseitig entweder von der Kolbenstange mechanisch sogar elektrisch in die andere Schaltstellung umgeschaltet. Die elektrische Umschaltung erfolgt bspw. mit Magneten und Steuersignalen, die durch eine Weg- und/oder Positionsabtastung des Hydraulikzylinders generiert werden. Ein zwischen den Abschaltventilen in der Arbeitsleitung angeordnetes, in Abströmrichtung zum Steuergerät sperrendes Rückschlagventil wird zum Absenken des Schardrucks aus der anderen Arbeitsleitung über eine Steuerleitung hydraulisch entsperrt. Ein in einer zwischen den Arbeitsleitungen verlaufenden Zweigleitung vorgesehenes erstes magnetbetätigtes 2/2-Wegeventil ist beim Einstellen und Umstellen und in Arbeitsstellung der Schare offen. An diese Zweigleitung kann, vorzugsweise, ein Druckspeicher und/oder Manometer angeschlossen sein.

Um bei dieser Ausführungsform auch den Scharaushub hydraulisch durchführen zu können, ist in der anderen Arbeitsleitung ein zweites magnetbetätigtes 2/2-Wegeventil angeordnet, das beim Einstellen, Umstellen und in Arbeitsstellung der Schare offen ist, und nur zum Scharaushub mit Umschalten des ersten 2/2-Wegeventils in dessen Sperrstellung in seine Offenstellung umschaltbar ist, um Druckmittel von der Kolbenbodenseite abströmen zu lassen.

In einer weiteren zweckmäßigen Ausführungsform enthält der Hydraulikkreis in einer ersten Zweigleitung zwischen den Arbeitsleitungen zum Einstellen mindestens zweier unterschiedlicher Schardrücke und zum Umstellen zwischen Schardrücken ein Proportional-Druck-Einstellventil mit einem Proportionalmagneten. Dieses Einstellventil ist beispielsweise ein Proportional-2-Wege-Stromregler, und kann in Öffnungsrichtung aus der Arbeitsleitung gegen den Proportionalmagneten druckvorgesteuert und in Stufen oder stufenlos verstellbar sein. Ferner ist in der Arbeitsleitung zur Kolbenbodenseite eine einen vom Steuergerät kontinuierlich eingespeisten Strom begrenzende Drossel angeordnet, und ist in der anderen Arbeitsleitung ein in Strömungsrichtung zum Steuergerät sperrendes Rückschlagventil vorgesehen.

Um bei dieser Ausführungsform auch den Scharaushub rein hydraulisch ausführen zu können, ist in einer zweiten Zweigleitung zwischen den Arbeitsleitungen ein magnetbetätigtes 2/2-Wegeventil angeordnet, das beim Einstellen, Umstellen und in Arbeitsstellung der Schare offen ist und nur zum Scharaushub mit kontinuierlich in die Arbeitsleitung zur Kolbenstangenseite vom Steuergerät eingespeistem Strom in seine Sperrstellung schaltbar ist, so dass dann die Kolbenstangen- und die Kolbenboden-Seiten nicht mehr verbunden sind.

Bei einer weiteren zweckmäßigen Ausführungsform enthält der Hydraulikkreis in ersten und zweiten Zweigleitungen zwischen den Arbeitsleitungen zwei unterschiedlich eingestellte Druckbegrenzungsventile zum Vorwählen und Einstellen unterschiedlicher Schardrücke sowie zum Umstellen ein magnetbetätigtes 3/2-Wege-Umschaltventil. In der zur Kolbenbodenseite führenden Arbeitsleitung ist eine Drossel enthalten, die einen in diesem Fall kontinuierlich vom Steuergerät eingespeisten Strom begrenzt und somit die Geschwindigkeit limitiert, und wird in der Arbeitsleitung zur Kolbenstangenseite ein in Strömungsrichtung zum Steuergerät sperrendes Rückschlagventil angeordnet.

Um bei dieser Ausführungsform auch den Scharaushub rein hydraulisch ausführen zu können, ist in einer die Arbeitsleitungen verbindenden dritten Zweigleitung ein magnetbetätigtes 2/2-Wegeventil angeordnet, das beim Einstellen, Umstellen und in Arbeitsstellung der Schare offen ist, und nur zum Scharaushub mit über die Arbeitsleitung zur Kolbenstangenseite vom Steuergerät kontinuierlich eingespeistem Strom in seine Sperrstellung schaltbar ist, so dass Druckmittel auf die Kolbenstangenseite gebracht wird und Druckmittel von der Kolbenbodenseite abströmt.

Zweckmäßig ist der Hydraulikkreis mit seinen Hydraulikkomponenten in einen Ventilbock eingegliedert, der über die Arbeitsleitungen mit dem als Mehrwegeschieber ausgebildeten Steuergeräts verbunden und beim oder am Hydraulikzylinder angeordnet ist. Der Mehrwegeschieber ist zweckmäßig ein 4/4-Wege-Steuerschieber mit manueller Betätigung, ggf. sogar mit manueller und magnetischer Betätigung, und kann zum Hydraulikkreis eines die Sämaschine schleppenden Traktors gehören.

Anhand der Zeichnung werden nachstehend Ausführungsformen des Erfindungsgegenstandes erläutert.

Es zeigen:
- Fig. 1: eine Seitenansicht eines Ausschnitts einer Sämaschine mit wenigstens einem in einer Arbeitsstellung befindlichem Säschar,

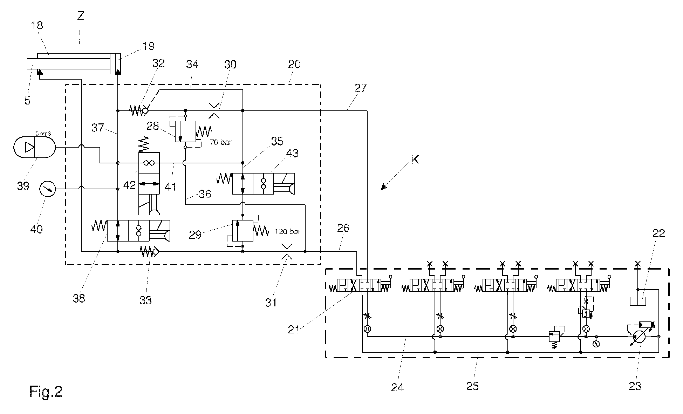

- Fig. 2: ein Blockschaltbild eines in der Sämaschine der Fig. 1 angeordneten Hydraulikkreises, zugeordnet zu einem doppelt wirkenden Hydraulikzylinder und einem Steuergerät, in drucklosem Zustand und in einer Schaltsituation vor Einstellen einer Position des Hydraulikzylinders.

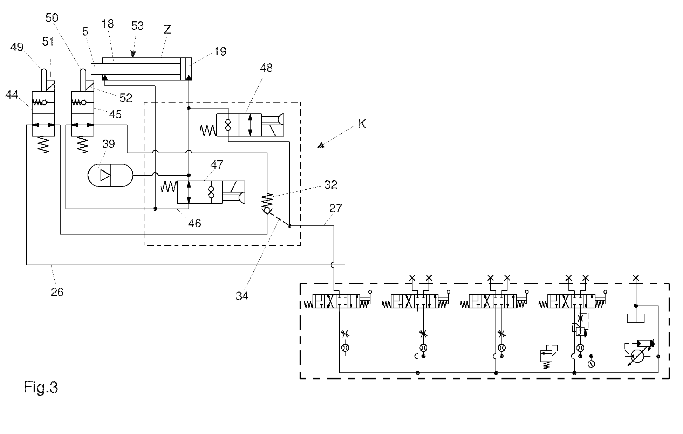

- Fig. 3: ein Blockschaltbild einer weiteren Ausführungsform des Hydraulikkreises,

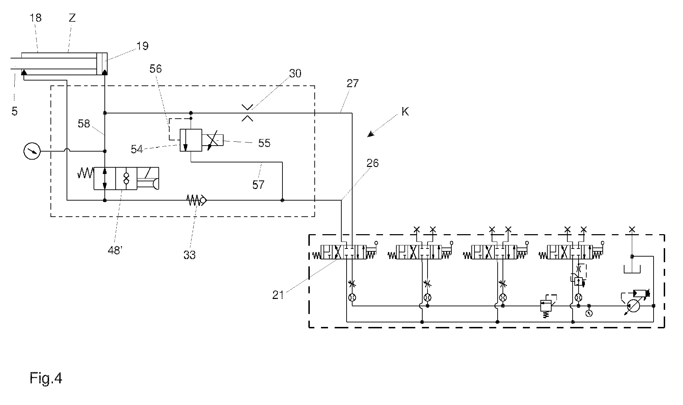

- Fig. 4: ein Blockschaltbild einer weiteren Ausführungsform des Hydraulikkreises, und

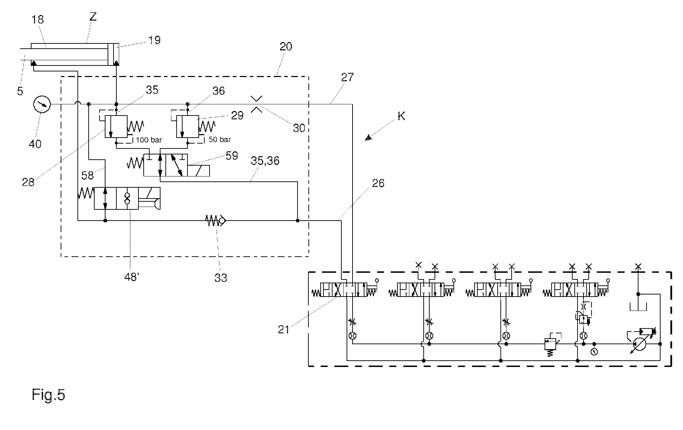

- Fig. 5: ein Blockschaltbild einer weiteren Ausführungsform des Hydraulikkreises.

Fig. 1 verdeutlicht schematisch einen Teil einer Sämaschine (F) mit einem Rahmen 1, an welchem ein Unterrahmen (2) für wenigstens ein Schar (DS) (vorzugsweise mehrere in Blickrichtung auf die Zeichnung hintereinander angeordnete Schare) angebracht ist. In dem Unterrahmen (2) ist ein Scharbalken (3) drehbar gelagert, der in der gezeigten Ausführungsform als Vierkantrohr ausgebildet ist und einen Hebel (4) trägt. Der Hebel (4) ist in einem Gelenk (6) mit einer Kolbenstange (5) eines doppelt wirkenden Hydraulikzylinders (Z) gekoppelt, dessen Zylindergehäuse (7) in einem Schwenklager (8) am Rahmen (1) abgestützt ist.

Das Schar (DS) (oder die Schare) sind an einem Haltehebel (9) angeordnet, der mit einem Ende (10) über wenigstens ein Federelement (11) so auf dem Scharbalken (3) angebracht ist, dass der Haltehebel (9) unter Vorspannen des Federelements (11) (z.B. eine vierkantige Gummifeder oder mehrere Federelemente), zumindest begrenzt relativ zum Scharbalken (3) verschwenkbar ist. Der Haltehebel (9) ist in einem Gelenk (12) mit einer Vertikalstrebe (13) gekoppelt, die über einen Lenker (14) mit einem Gelenk (15) im Unterrahmen (2) verbunden ist, sodass ein Teil des Unterrahmens (2), der Haltehebel (9), die Vertikalstrebe (13) und der Lenker (14) eine Art Lenkerparallelogramm bilden.

Bei dem Schar (DS) handelt es sich beispielsweise um ein sogenanntes Doppelscheibenschar.

Wird die Kolbenstange (5) eingezogen, so lässt sich das Schar (DS) beispielsweise in eine Aushubstellung aus dem Boden und vom Boden wegbringen und darin halten. Wird die Kolbenstange (5) ausgefahren (Richtungspfeile 16, 17), dann wird das Schar (DS) beispielsweise aus der Aushubstellung abgesenkt in eine Arbeitsstellung auf oder in dem Boden, wobei das Federelement (11) zunehmend vorgespannt wird und das Schar (DS) mit einem Schardruck in Richtung zum Boden beaufschlagt.

Dem Hydraulikzylinder (Z) ist ein Hydraulikkreis (K) zugeordnet, der beispielsweise über eine zentrale Steuerung (CU), beispielsweise in einem die Sämaschine (S) schleppenden Traktor, ansteuerbar ist, und es ermöglicht, rein hydraulisch zumindest zwei unterschiedliche Schardrücke vorzuwählen, einzustellen und zwischen Schardrücken umzustellen. Außerdem sind, vorzugsweise in den Hydraulikkreis (K) Hydraulikkomponenten integriert, die hydraulisch eine Konturanpassung beim Arbeiten des Schars (DS) sowie den hydraulischen Scharaushub ermöglichen.

In der Ausführungsform des Hydraulikkreises (K) in Fig. 2 ist zumindest der überwiegende Teil von Hydraulikkomponenten in einen Ventilblock (20) integriert, der am oder beim Hydraulikzylinder (Z) montiert sein kann und über Arbeitsleitungen (26, 27) mit einem Steuergerät (21), beispielsweise eines Hydrauliksystems, des Traktors, verbunden ist. Das Steuergerät (21), im gezeigten Fall ein 4/4-Wege-Steuerschieber mit Handbetätigung (alternativ mit elektrischer Betätigung), ist über eine Tankleitung (25) mit einem Tank (22) und eine Druckleitung (24) mit einer Druckquelle (23), hier z.B. einer Regelpumpe, verbunden. Der Hydraulikzylinder (Z) weist eine Kolbenstangenseite (18) mit kleinerer Druckbeaufschlagungsfläche und eine Kolbenbodenseite (19) mit größerer Beaufschlagungsfläche auf, sodass selbst bei gleichen Drücken durch die Beaufschlagungsflächendifferenz eine Stellkraft der Kolbenstange in Fig. 2 nach links erzeugt wird, entsprechend beispielsweise dem Richtungspfeil 16 in Fig. 1.

Die Arbeitsleitung (26) führt über eine Drossel (31) und ein in Abströmrichtung zum Steuergerät (21) sperrendes Rückschlagventil zur Kolbenstangenseite (18). Die Arbeitsleitung (27) führt über eine Drossel (30) und ein in Abströmrichtung zum Steuergerät (21) sperrendes, jedoch hydraulisch entsperrbares Rückschlagventil (32) zur Kolbenbodenseite (19). Das Rückschlagventil (32) ist über eine Steuerleitung (34) hydraulisch entsperrbar, die über einen Knoten in der Arbeitsleitung (27) und eine Zweigleitung (35), die stromauf der Drossel (30) die Arbeitsleitungen (27) und (26) verbindet, mit einem Steuerdruck beaufschlagbar ist. Das Rückschlagventil (32) ist, vorzugsweise, mit einem Aufsteuerdruck-Verhältnis von mindestens 1:4 ausgebildet, d.h. zum Aufsteuern wird nur ein Aufsteuerdruck benötigt, der einem Viertel oder weniger des vom Rückschlagventil (32) gehaltenen höheren Drucks entspricht. In Strömungsrichtung zur Kolbenbodenseite (19) stromab der Drossel (30) ist die Arbeitsleitung (27) über eine weitere Zweigleitung (36) in einem zwischen der Drossel (31) und dem Steuergerät (21) liegenden Knoten mit der Arbeitsleitung (26) verbunden. Eine weitere Zweigleitung (37) verbindet die Arbeitsleitungen (26, 27) zwischen dem Rückschlagventil (33) und der Kolbenstangenseite (18) und der Kolbenbodenseite (19) und dem Rückschlagventil (33). An diese Zweigleitung (37) kann ein Druckspeicher (39) angeschlossen sein und/oder ein Manometer (40), der, bzw. die, zweckmäßig außerhalb des Ventilblocks (20) platziert sind.

In der Zweigleitung (35) ist ein in Strömungsrichtung zur Arbeitsleitung (27) öffnendes Druckbegrenzungsventil (29) vorgesehen, das auf einen maximalen Schardruck, beispielsweise 120 bar, eingestellt ist und durch eine Regelfeder zur Sperrstellung beaufschlagt wird. In der Zweigleitung (36) ist ein zur Arbeitsleitung (26) öffnendes Druckbegrenzungsventil (28) angeordnet, das auf einen minimalen Schardruck, z.B. 70 bar, eingestellt ist und durch eine Regelfeder zur Sperrstellung beaufschlagt ist. Beide Druckbegrenzungsventile (28, 29) sind, ähnlich Druckwaagen, in Aufsteuerrichtung aus der jeweiligen Arbeitsleitung (26 bzw. 27) druckvorgesteuert, und in Zusteuerseite aus der jeweiligen Zweigleitung (36) bzw. (35). Der jeweilige Schardruck ist vorwählbar durch Einstellung der Regelfeder am Druckbegrenzungsventil (28, 29). Diese Regelfedern können manuell oder elektrisch oder elektrohydraulisch verstellbar sein.

Stromab des Druckbegrenzungsventil (29) ist in der Zweigleitung (35) ein magnetbetätigtes 2/2-Wege-Ventil 43 angeordnet, das durch eine Feder in der gezeigten Durchgangsstellung gehalten wird, solange der Betätigungsmagnet nicht bestromt ist, und bei Bestromung in eine Sperrstellung schaltbar ist. In der Zweigleitung (37) ist ebenfalls ein magnetbetätigtes 2/2-Wegeventil (38) enthalten, das durch eine Feder in der gezeigten Durchgangsstellung haltbar ist und bei bestromtem Magneten in die Sperrstellung schaltet, wobei der Druckspeicher (39) bzw. Manometer (40) an die Zweigleitung (37) zwischen dem 2/2-Wege-Ventil (38) und der Kolbenbodenseite (19) angeschlossen sind. Schließlich ist eine Zweigleitung (41) vorgesehen, die die Zweigleitung (37) zwischen der Kolbenbodenseite (19) und dem 2/2-Wege-Ventil (38) mit der Zweigleitung (35), dort zwischen dem 2/2-Wege-Ventil (43) und der Steuerleitung (34), verbindet. In dieser Zweigleitung (41) ist ein weiteres, magnetbetätigtes 2/2-Wege-Ventil (42) enthalten, das durch eine Feder bei unbestromtem Magneten die gezeigte Sperrstellung einnimmt und bei Bestromung in eine Durchgangsstellung schaltbar ist.

Der Hydraulikkreis (K) ist mit seiner Verschaltung primär ausgelegt zum Vorwählen und Einstellen, hier zumindest zweier unterschiedlicher Schardrücke und zum Umstellen zwischen diesen Schardrücken. Optional sind jedoch weitere Hydraulikkomponenten eingegliedert, die auch eine Konturanpassung bei unebenem Boden und einen rein hydraulischen Scharaushub ermöglichen.

Beim Arbeiten und zur Konturanpassung sind die Kolbenstangenseite (18) und die Kolbenbodenseite (19) über das in der gezeigten Schaltungssituation offene 2/2-Wege-Ventil (38) verbunden. Der jeweils am Druckbegrenzungsventil (28, 29) gewählte Schardruck wird aus dem Druck im System erzeugt. Bei durch Bodenunebenheiten bedingten Bewegungen der Kolbenstange (5) wird die Volumendifferenz zwischen der Kolbenstangenseite (18) und der Kolbenbodenseite (19) vom Druckspeicher (39) ausgeglichen, der somit Bodenkonturen kompensiert.

Zum hydraulischen Scharaushub werden die 2/2-Wege-Ventile (38) und (43) in ihre Sperrstellungen umgeschaltet, während das 2/2-Wege-Ventil (42) in seine Durchgangsstellung geschaltet wird. Vom Steuergerät (21) wird über die Leitung (26), die Drossel (31); das Rückschlagventil (33), die Kolbenstangenseite (18) beaufschlagt, während Druckmittel von der Kolbenbodenseite durch das offene 2/2-Wege-Ventil (42) und die Arbeitsleitung (27) über das Steuergerät (21) zum Tank (22) ausgeschoben wird, bis letztendlich die Schare (DS) ausgehoben sind.

Über die Druckbegrenzungsventile (28, 29) sind die maximalen und minimalen Schardrücke vorwählbar, einstellbar und ist zwischen diesen Schardrücken wie folgt umstellbar.

An den Druckbegrenzungsventilen (28, 29) sind die Schardrücke zum Vorwählen entsprechend eingestellt. Zum Einstellen des minimalen Schardrucks wird vom Steuergerät (21) über die Arbeitsleitung (27), die Drossel (30) und das Rückschlagventil (32) Druckmittel in das System gefördert, bis der am Druckbegrenzungsventil (28) vorgewählte Schardruck erreicht ist. Dann spricht das Druckbegrenzungsventil an und lässt überschüssiges Druckmittel über die Zweigleitung (36) und die Arbeitsleitung (26) sowie das Steuergerät (21) zum Tank (22) abströmen. Dabei ist das Schar in Arbeitsstellung auf dem Acker bzw. im Boden.

Zum Umstellen vom minimalen Schardruck zum maximalen Schardruck wird über das Steuergerät (21) die Arbeitsleitung (26) druckbeaufschlagt, bis über die Drossel (31) und das Rückschlagventil (33) am Druckbegrenzungsventil (29) der maximale Schardruck erreicht ist, wobei das Rückschlagventil (32) in der in Fig. 2 gezeigten Schaltungssituation sperrt. Die Schare (DS) sind in Arbeitsstellung.

Zum Einstellen des maximalen Schardrucks wird über das Steuergerät (21) die Arbeitsleitung (26) druckbeaufschlagt, bis über die Drossel (31) und das Rückschlagventil (33) am Druckbegrenzungsventil (29) der vorgewählte maximale Schardruck erreicht ist und dieses anspricht. Die Schare sind in Arbeitsstellung auf oder in dem Boden.

Zum Umstellen vom maximalen Schardruck zum minimalen Schardruck wird über das Steuergerät (21) die Leitung (27) druckbeaufschlagt, bis das Rückschlagventil (32) über die Steuerleitung (34) aufgesteuert ist und Druckmittel mit dem noch hohen Druck über das Druckbegrenzungsventil (28), die Zweigleitung (36) und die Arbeitsleitung (26) zum Tank (22) strömt, während gleichzeitig weiterhin Druckmittel über die Arbeitsleitung (27) und die Drossel (30) in den Hydraulikkreis (K) gefördert wird, bis letztendlich der minimale Schardruck am Druckbegrenzungsventil (28) erreicht ist, wobei die Schare in Arbeitsstellung sind.

Vorteile dieser Ausführungsform: Vorwählen in beliebiger Scharposition; kostengünstige und zuverlässige Ventile.

In der Ausführungsform in Fig. 3 sind in ausgezogenen Linien zwei in Serie in der Arbeitsleitung (26) zur Kolbenstangenseite (18) in Serie geschaltete, mechanisch beispielsweise von der Kolbenstange (5) direkt oder indirekt betätigbare 2/2-Wege-Abschaltventile (44, 45) enthalten gezeigt, die die unterschiedlichen Schardrücke in Abhängigkeit vom Hubweg des Hydraulikzylinders (Z) einstellen. Gestrichelt sind in Fig. 3 bei den 2/2-Wege-Abschaltventilen (44, 45) anstelle oder zusätzlich zu mechanischen Tastern (49, 59) Schaltmagneten (51, 52) angedeutet. In diesem Fall können die Abschaltventile (44, 45) elektrisch geschaltet werden, beispielsweise über eine z.B. elektrische Wegabtastung (53) des Hydraulikzylinders (Z). Die Arbeitsleitung (27), von der die Vorsteuerleitung (34) zum hydraulisch entsperrbaren Rückschlagventil (32) in der Arbeitsleitung (26) abzweigt, führt über ein magnetbetätigtes 2/2-Wegeventil (48) zur Kolbenbodenseite (19). Eine die Arbeitsleitungen (26, 27) verbindende Zweigleitung (46) enthält ein weiteres magnetbetätigtes 2/2-Wegeventil (47). An die Zweigleitung (46) ist der Druckspeicher (39) angeschlossen.

Der Druckspeicher (39) wirkt in der gezeigten Schaltungssituation bei der Konturanpassung, wie anhand Fig. 2 erläutert. Hingegen wirken die 2/2-Wege-Ventile (47, 48) beim hydraulischen Scharaushub mit, von denen das 2/2-Wegeventil (47) in seine Sperrstellung und das 2/2-Wege-Ventil (48) in seine Durchgangsstellung geschaltet wird, während das Steuergerät 21 die Arbeitsleitung (26) druckbeaufschlagt, bis in der gezeigten Schaltungssituation, über das Abschaltventil (44) das Rückschlagventil (32) und das Abschaltventil (45) die Kolbenstangenseite (18) beaufschlagt wird, während von der Kolbenbodenseite (19) Druckmittel über das in der Offenstellung befindliche 2/2-Wege-Ventil (48) und die Arbeitsleitung (27) und das Steuergerät (21) zum Tank ausgeschoben wird.

Der minimale und der maximale Schardruck werden durch eine Einstellung der Betätigung der mechanischen Abschaltventile (44, 45) vorgewählt, d.h., der jeweilige Schardruck wird einer bestimmten Hub-Position des Hydraulikzylinders (Z) zugeordnet.

Die 2/2-Wege-Abschaltventile (44, 45) werden durch Ventilfedern in ihre Durchgangsstellungen geschaltet. Werden diese Abschaltventile umgeschaltet (mechanisch oder elektrisch), dann sperrt das Abschaltventil (44) nur in Strömungsrichtung zur Kolbenstangenseite (18), während das Abschaltventil (45) in Strömungsrichtung zum Rückschlagventil (32) sperrt. In der jeweils entgegengesetzten Richtung bleiben sie durchgängig offen.

Zum Einstellen des maximalen Schardrucks wird vom Steuergerät (1) über die Leitung (26), das Abschaltventil (44) in der gezeigten Schaltungssituation, das Rückschlagventil (32), das Abschaltventil (45) und das 2/2-Wege-Ventil (47) Druck aufgebaut, bis nach einer Bewegung der Kolbenstange (5) das Abschaltventil (44) für den maximalen Schardruck abschaltet und die Arbeitsleitung (26) sperrt.

Um auf den minimalen Schardruck umzustellen, wird vom Steuergerät (21) die Arbeitsleitung (27) druckbeaufschlagt, wobei über die Steuerleitung (34) das Rückschlagventil (32) entsperrt wird und Druckmittel über das 2/2-Wege-Ventil (47), das Abschaltventil (45), das entsperrte Rückschlagventil (3), das Abschaltventil (44) und die Arbeitsleitung (26) über das Steuergerät (21) zum Tank abfließt, bis das Abschaltventil (45) für minimalen Schardruck abschaltet. Die Umstellgeschwindigkeit ist dabei nicht begrenzt.

In der Ausführungsvariante mit den elektrisch betätigten Abschaltventilen (44, 45) erfolgen das Einstellen der Schardrücke und das Umstellen zwischen den Schardrücken in analoger Weise, beispielsweise über die Wegabtastung (53) des Hydraulikzylinders (Z).

Vorteile dieser Ausführungsform: Schnelles Umstellen während der Arbeit; Vorwählen in beliebiger Scharposition, einfach, zuverlässig.

In der Ausführungsform des Hydraulikkreises (K) in Fig. 4 kann der Schardruck stufenlos oder in Stufen rein elektrisch gewählt und eingestellt werden, und wird auch das Umstellen zwischen unterschiedlichen Schardrücken elektrisch gesteuert. Die Arbeitsleitung (27) zur Kolbenbodenseite (19) enthält die Drossel (30), während die Arbeitsleitung (26) zur Kolbenstangenseite (18) das Rückschlagventil (33) enthält. In einer die Arbeitsleitungen (27, 26) verbindenden Zweigleitung (57) ist ein Proportional-Druckeinstellventil (54) oder Proportional-Druckbegrenzungsventil (54) mit einem Proportionalmagneten (55) vorgesehen und z.B. über eine Steuerleitung (56) aus der Arbeitsleitung (27) gegen den Proportionalmagneten (55) druckvorgesteuert. Die vom Proportionalmagneten (55) in Schließrichtung des Ventils ausgeübte Kraft ist proportional zur Strombeaufschlagung. In einer weiteren Zweigleitung (58) zwischen den Arbeitsleitungen (26, 27) ist ein magnetbetätigtes 2/2-Wege-Ventil (48') enthalten, das durch Federkraft in der gezeigten Durchgangsstellung gehalten wird und bei Bestromen des Magneten in seine Absperrstellung geht.

Das Vorwählen des jeweiligen Schardrucks wird elektrisch durch Bestromen des Proportionalmagneten (55) ausgeführt. Über das Steuergerät (21) wird zum Einstellen des gewählten Schardrucks kontinuierlich die Arbeitsleitung (27) druckbeaufschlagt, in der die Drossel (30) angeordnet ist. Die Schare (DS) brauchen nicht in Arbeitsstellung zu sein, während der gewählte Schardruck eingestellt wird, bis das Proportional-Druckeinstellventil (54) überschüssiges Druckmittel über die Zweigleitung (57) und die Arbeitsleitung (26) abströmen lässt.

Auch in Arbeitsstellung der Schare (DS) kann zwischen elektrisch wählbaren unterschiedlichen Schardrücken in Stufen oder stufenlos umgestellt werden. In Arbeitsstellung und zur Konturanpassung sind die Kolbenbodenseite (19) und die Kolbenstangenseite (18) über das magnetbetätigte 2/2-Wege-Ventil (48') miteinander verbunden, wobei die Beaufschlagungs-Flächendifferenz im Hydraulikzylinder (Z) den gewählten Schardruck erzeugt, während über das Steuergerät (21) kontinuierlich Druckmittel über die Arbeitsleitung (27) und die Drossel (30) eingespeist wird.

Für den hydraulischen Scharaushub wird das 2/2-Wege-Ventil (48') in seine Sperrstellung geschaltet. Das Steuergerät (21) beaufschlagt die Arbeitsleitung (26), so dass über das Rückschlagventil (33) die Kolbenstangenseite (18) unter Druck gesetzt wird, während von der Kolbenbodenseite (19) Druckmittel über die Drossel (30) und die Arbeitsleitung (27) durch das Steuergerät (21) zum Tank verdrängt wird, bis die Schare (DS) ausgehoben sind.

Vorteile dieser Ausführungsform: Schnelles Verstellen und Umstellen während der Arbeit; einfache Schaltung, Vorwählen in beliebiger Scharposition.

Der Hydraulikkreis (K) in Fig. 5 ist so ausgelegt, dass sich durch elektrische Vorwahl zwei unterschiedliche Druckstufen oder Schardrücke wählen und einstellen lassen, und zwischen diesen Schardrücken umstellbar ist.

In der Arbeitsleitung (27) zur Kolbenbodenseite (29) sind die Drossel (30) und der Manometer (40) enthalten. In der Arbeitsleitung (26) zur Kolbenstangenseite (18) ist das Rückschlagventil (33) enthalten, das in Rückströmrichtung zum Steuergerät (21) sperrt. Von der Arbeitsleitung (27) zweigen zwei Zweigleitungen (35, 36) zu einem magnetbetätigten 3/2-Wegeventil (59) ab, von welchem die vereinten Zweigleitungen (35, 36) stromauf des Rückschlagventils (33) zur Arbeitsleitung (26) führen. In der abströmseitig auf die Drossel (30) folgenden Zweigleitung (36) ist ein Druckbegrenzungsventil (29) enthalten, das auf den minimalen Schardruck (untere Stufe) eingestellt ist, während in der von der Drossel (30) abströmseitig weiter entfernten Zweigleitung (35) ein auf den maximalen Schardruck (obere Druckstufe) eingestelltes Druckbegrenzungsventil (28) vorgesehen ist. In der in Fig. 5 gezeigten Ausführungsform sind z.B. beide Druckbegrenzungsventile (28, 29) nach Art von Druckwaagen zuströmseitig und abströmseitig druckvorgesteuert, wobei die abströmseitigen Druckvorsteuerungen an der Schließseite parallel zu einer Regelfeder wirken. Wie in der Ausführungsform in Fig. 4 ist in der die Arbeitsleitungen (26, 27) verbindenden Zweigleitung (58) das magnetbetätigte 2/2-Wegeventil (48') enthalten.

Der maximale Schardruck und der minimale Schardruck werden an den Druckbegrenzungsventilen (28, 29) vorgewählt, z.B. mit 100 bar bzw. 50 bar. Die Druckbegrenzungsventile können ggf. manuell oder sogar elektrisch oder elektrohydraulisch verstellbar sind.

Zum Einstellen des minimalen Schardrucks werden in der gezeigten Schaltungssituation mit nichtbetätigtem 3/2-Wegeventil (59) die Zweigleitung (35) abgesperrt; Zweigleitung (36) mit der Arbeitsleitung (26) verbunden, über das Steuergerät (21) die Arbeitsleitung (27) druckbeaufschlagt und über die Drossel (30) kontinuierlich Druckmittel in das System gefördert. Bei Erreichen des minimalen Schardrucks spricht das Druckbegrenzungsventil (29) an.

Zum Einstellen des maximalen Schardrucks werden bei geschaltetem 3/2-Wegeventil (59) die Zweigleitung (36) abgesperrt; die Zweigleitung (35) mit der Arbeitsleitung (26) verbunden und über das Steuergerät (21) und die Drossel (30) in der Arbeitsleitung (27) Druckmittel in das System gefördert, bis das Druckbegrenzungsventil (28) mit Erreichen des maximalen Schardrucks anspricht.

Zum Umstellen zwischen den Schardrücken wird das 3/2-Wegeventil (59) hin- und hergeschalten, während das Steuergerät (21) das System über die Arbeitsleitung (27) druckbeaufschlagt.

In Arbeitsstellung und zur Konturanpassung sind die Kolbenbodenseite (19) und die Kolbenstangenseite (18) über das 2/2-Wegeventil (48') miteinander verbunden. Der jeweilige Schardruck wird über die Beaufschlagungsflächendifferenz im Hydraulikzylinder (Z) erzeugt, wobei über das Steuergerät (21) kontinuierlich Druckmittel in die Arbeitsleitung (27) gefördert wird. Zum Halten des jeweiligen Schardrucks nicht benötigtes Druckmittel fließt über das 3/2-Wegeventil (59) und die Arbeitsleitung (26) zum Tank. Bei der Konturanpassung werden Volumenunterschiede zwischen der Kolbenstangenseite (18) und der Kolbenbodenseite (19) durch den kontinuierlichen Druckmittelzufluss kompensiert.

Für einen hydraulischen Scharaushub wird das 2/2-Wegeventil (48') elektrisch in seine Sperrstellung geschaltet und wird über das Steuergerät (21) die Arbeitsleitung (26) beaufschlagt, sodass über das Rückschlagventil (33) die Kolbenstangenseite (18) unter erhöhten Druck gesetzt wird. Gleichzeitig wird Druckmittel von der Kolbenbodenseite (19) über die Drossel (39) und die Arbeitsleitung (26) durch das Steuergerät (21) zum Tank verdrängt, bis die Schare hydraulisch ausgehoben sind.

Vorteile dieser Ausführungsfirm: Kostengünstige und zuverlässige Ventile einfache Schaltung.

## Patentansprüche

1. Sämaschine (S) mit wenigstens einem über wenigstens ein Federelement (10) unter Schardruck in Arbeitsstellung in den Boden beaufschlagbaren Schar (DS) und wenigstens einer einen doppelt wirkenden Hydraulikzylinder (Z) aufweisenden Einstellvorrichtung zum Vorwählen und ferngesteuerten Einstellen mindestens zweier unterschiedliche Schardrücke definierender Positionen des Hydraulikzylinders (Z) zum Vorspannen des Federelements (10) und zum Umstellen zwischen den Positionen, **dadurch gekennzeichnet, dass** zumindest das Einstellen der und das Umstellen zwischen den Positionen über einen dem Hydraulikzylinder (Z) zugeordneten Hydraulikkreis (K) und einem diesem vorgeschalteten hydraulischen Steuergerät (21) ohne mechanische Anschläge rein hydraulisch ausführbar sind.

2. Sämaschine nach Anspruch 1, **dadurch gekennzeichnet, dass** in den Hydraulikkreis (K) Hydraulikkomponenten für einen hydraulischen Scharaushub integriert sind.

3. Sämaschine nach Anspruch 1, **dadurch gekennzeichnet, dass** in den Hydraulikkreis (K) Hydraulikkomponenten für eine hydraulische Konturanpassung in Arbeitsstellung befindlicher Schare (DS) integriert sind.

4. Sämaschine nach Anspruch 1, **dadurch gekennzeichnet, dass** der Hydraulikkreis (K) einen über das Steuergerät (21) aufladbaren Druckspeicher (39) enthält und nach dem Einstellen der jeweiligen Position in Arbeitsstellung der Schare über das Steuergerät (21) geschlossen ist.

5. Sämaschine nach Anspruch 1, **dadurch gekennzeichnet, dass** der Hydraulikkreis (K) beim Einstellen und Umstellen über das Steuergerät (21) geöffnet ist.

6. Sämaschine nach Anspruch 1, **dadurch gekennzeichnet, dass** der Hydraulikzylinder (Z) in einer über Arbeitsleitungen (26, 27) mit dem Steuergerät (21) verbundenen Zylinderkammer einen Kolben mit einer an der Kolbenbodenseite (19) großen Beaufschlagungsfläche und an der Kolbenstangenseite (18) kleineren Beaufschlagungsfläche aufweist, und dass, vorzugsweise, mit ausfahrender Kolbenstange (5) der Schardruck erhöht wird.

7. Sämaschine nach Anspruch 6, **dadurch gekennzeichnet, dass** der Hydraulikkreis zum Vorwählen und Einstellen in ersten und zweiten Zweigleitungen (35, 36) zwischen den Arbeitsleitungen (26, 27) zum Hydraulikzylinder (Z) zwei für einen maximalen und einen minimalen Schardruck unterschiedlich eingestellte Druckbegrenzungsventile (28, 29) aufweist, vorzugsweise manuell, elektrisch und/oder elektrohydraulisch verstellbare Druckbegrenzungsventile, dass in den Arbeitsleitungen (26, 27) je eine Drossel (30, 31) und je ein in Abströmrichtung zum Steuergerät (21) sperrendes Rückschlagventil (32, 33) vorgesehen sind, von denen ein, vorzugsweise mit einem Aufsteuerdruckverhältnis von mindestens 1:4 ausgebildetes, Rückschlagventil (32) aus einer Arbeitsleitung (26) über eine Steuerleitung (34) zum Umstellen vom maximalen Schardruck auf den minimalen Schardruck hydraulisch entsperrbar ist, und dass in einer dritten Zweigleitung (37) zwischen den Arbeitsleitungen (26, 27) ein erstes magnetbetätigtes 2/2-Wege-Ventil (38) vorgesehen ist, das zumindest in Arbeitsstellung der Schare (DS) in einer Offenstellung ist und die Kolbenstangenseite (18) und die Kolbenbodenseite (19) verbindet, wobei, vorzugsweise an die dritte Zweigleitung (37) ein Druckspeicher (39) und/oder Manometer (40) angeschlossen ist.

8. Sämaschine nach Anspruch 7, **dadurch gekennzeichnet, dass** in einer die dritte Zweigleitung (37) mit der ersten, das höher eingestellte Druckbegrenzungsventil (29) enthaltenden Zweigleitung (35) verbindenden vierten Zweigleitung (41) ein beim Einstellen und Umstellen sperrendes, zweites magnetbetätigtes 2/2-WegeVentil (42) und in der ersten Zweigleitung (35) ein drittes, beim Einstellen und Umstellen offenes magnetbetätigtes 2/2-Wege-Ventil (43) vorgesehen sind, die für den Scharaushub nach Schalten des ersten 2/2-Wege-Ventils (38) gemeinsam umschaltbar sind.

9. Sämaschine nach Anspruch 1, **dadurch gekennzeichnet, dass** der Hydraulikkreis (K) in der Arbeitsleitung (26) zur Kolbenstangenseite (18) in Serie zwei 2/2-Wege-Abschaltventile (44, 45) zum Einstellen der maximalen und minimalen Schardrücke enthält, die in einer Schaltstellung offen sind, in der anderen Schaltstellung in nur einer Strömungsrichtung sperren und beim Einstellen abhängig vom Hub des Hydraulikzylinders (Z) wechselseitig abhängig vom Hub des Hydraulikzylinders (Z) mechanisch (49, 50) oder elektrisch (51, 52, 53) in die andere Schaltstellung umschaltbar sind, und dass zwischen den 2/2-Wege-Abschalt-Ventilen (44, 45) in der Arbeitsleitung (26) ein in Abströmrichtung zum Steuergerät (21) sperrendes Rückschlagventil (32) angeordnet ist, das zum Absenken des Schardrucks aus der anderen Arbeitsleitung (27) über eine Steuerleitung (34) hydraulisch entsperrbar ist, und dass in einer von der einen Arbeitsleitung (26) zur anderen Arbeitsleitung (27) führenden Zweigleitung (46) ein erstes magnetbetätigtes 2/2-Wege-Ventil (47) angeordnet ist, das beim Einstellen und Umstellen und in Arbeitsstellung der Schare (DS) offen ist, wobei, vorzugsweise, an die Zweigleitung (46) ein Druckspeicher (39) und/oder Manometer angeschlossen ist.

10. Sämaschine nach Anspruch 9, **dadurch gekennzeichnet, dass** in der anderen Arbeitsleitung (27) ein zweites magnetbetätigtes 2/2-Wege-Ventil (48) angeordnet ist, das beim Einstellen, Umstellen und in Arbeitsstellung der Schare (DS) offen ist und zum Scharaushub mit Umschalten des ersten magnetbetätigten 2/2-WegeVentils (47) in dessen Sperrstellung in seine Offenstellung umschaltbar ist.

11. Sämaschine nach Anspruch 1, **dadurch gekennzeichnet, dass** der Hydraulikkreis (K) in einer ersten Zweigleitung (57) zwischen den Arbeitsleitungen (26, 27) zum Einstellen mindestens zweier unterschiedlicher Schardrücke und zum Umstellen zwischen Schardrücken ein Proportional-Druck-Einstellventil (54) mit einem Proportionalmagneten (55), vorzugsweise einen Proportional-Zweiwege-Stromregler, enthält, das in Öffnungsrichtung aus der Arbeitsleitung (27) gegen den Proportionalmagneten (55) druckvorgesteuert und in Stufen oder stufenlos verstellbar ist, dass in der Arbeitsleitung (27) zur Kolbenbodenseite (19) eine einen vom Steuergerät (21) kontinuierlich eingespeisten Strom begrenzende Drossel (30) angeordnet ist, und dass in der anderen Arbeitsleitung (26) ein in Strömungsrichtung zum Steuergerät (21) sperrendes Rückschlagventil (33) vorgesehen ist.

12. Sämaschine nach Anspruch 11, **dadurch gekennzeichnet, dass** in einer zweiten die Arbeitsleitungen 26, 27) verbindenden Zweigleitung (58) ein magnetbetätigtes 2/2-Wege-Ventil (48') angeordnet ist, das beim Einstellen, Umstellen und in Arbeitsstellung der Schare (DS) offen ist und zum Scharaushub mit kontinuierlich in die Arbeitsleitung (26) zur Kolbenstangenseite (18) vom Steuergerät (21) eingespeistem Strom in seine Sperrstellung schaltbar ist.

13. Sämaschine nach Anspruch 1, **dadurch gekennzeichnet, dass** der Hydraulikkreis (K) in ersten und zweiten Zweigleitungen (35, 36) zwischen den Arbeitsleitungen (27, 26) zur Kolbenbodenseite und zur Kolbenstangenseite zwei auf einen maximalen und einen minimalen Schardruck eingestellte Druckbegrenzungsventile (28, 29) sowie zum Umstellen ein magnetbetätigtes 3/2-Wege-Umschalt-Ventil (59) enthält, und dass in der Arbeitsleitung (27) zu Kolbenbodenseite (19) eine einen vom Steuergerät (21) kontinuierlich eingespeisten Strom begrenzende Drossel (30) und in der Arbeitsleitung (26) zur Kolbenstangenseite (18) ein in Strömungsrichtung zum Steuergerät (21) sperrendes Rückschlagventil (33) angeordnet sind.

14. Sämaschine nach Anspruch 13, **dadurch gekennzeichnet, dass** in einer die Arbeitsleitungen (26, 27) verbindenden dritten Zweigleitung (58) ein magnetbetätigtes 2/2-Wege-Ventil (48') angeordnet ist, das beim Einstellen, Umstellen und in Arbeitsstellung der Schare (DS) offen ist, und zum Scharaushub mit über die Arbeitsleitung (26) zur Kolbenstangenseite (18) vom Steuergerät (21) kontinuierlich eingespeistem Strom in seine Sperrstellung schaltbar ist.

15. Sämaschine nach wenigstens einem der vorhergehenden Ansprüche, **dadurch gekennzeichnet, dass** der Hydraulikkreis (K) in einen Ventilblock (20) eingegliedert ist, der über die Arbeitsleitungen (26, 27) mit dem als Mehrwegeschieber, vorzugsweise 4/4-Wege-Steuerschieber, ausgebildeten Steuergerät (21) verbunden und beim oder am Hydraulikzylinder (Z) angeordnet ist.
